(19) Europäisches Patentamt
European Patent Office
Office européen des brevets

(11) EP 0 491 265 B1

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int Cl.[6]: **C08L 95/00**
// (C08L95/00, 33:06)

(21) Anmeldenummer: **91121142.3**

(22) Anmeldetag: **10.12.1991**

(54) **Homogene, Polyalkyl(meth)acrylat-modifizierte Bitumina**

Homogeneous, polyalkyl(meth)acrylat-modified bitumen

Bitume homogene modifié par un poly(meth)acrylate d'alkyl

(84) Benannte Vertragsstaaten:
**AT BE CH DE DK ES FR GB IT LI NL SE**

(30) Priorität: **15.12.1990 DE 4040234**

(43) Veröffentlichungstag der Anmeldung:
**24.06.1992 Patentblatt 1992/26**

(73) Patentinhaber: **RÖHM GMBH**
**D-64293 Darmstadt (DE)**

(72) Erfinder: **Müller, Michael, Dr.**
**W-6140 Bensheim 3 (DE)**

(56) Entgegenhaltungen:
**EP-A- 0 400 391** **EP-A- 0 400 437**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 491 265 B1

## Beschreibung

Gebiet der Erfindung

Die Erfindung betrifft Polymere auf Polyalkyl(meth)acrylat-Basis als Bitumenverbesserungsmittel und mit solchen Polymeren modifizierte Bitumina (PmB) mit verbesserten technischen Eigenschaften.

Stand der Technik

Bitumen, das ein Gemisch von im wesentlichen verschiedenen Kohlenwasserstoffen, mit schwankenden Anteilen an paraffinischen, naphthenischen und aromatischen Kohlenwasserstoffen ist, wird aufgrund seiner Eigenschaften vielfältig verwendet, so für die Herstellung von Straßenbelägen, als Vergußmassen, als Anstriche, im Bautenschutz oder in Form von Dachpappen sowie als Abdichtungsmittel gegen Grundwasser.

Infolge der spezifischen Produkteigenschaften - Bitumina besitzen in Abhängigkeit von der Rohölprovenienz nur geringe bis gar keine elastischen Eigenschaften - verspröden damit hergestellte Beläge bei niedrigen Temperaturen und erweichen bei höheren Temperaturen.

Durch Zusatz verschiedener Additive, insbesondere von Polymeren, wird versucht, eine Vergütung der Bitumina, insbesondere eine Verbesserung der rheologischen Eigenschaften zu erreichen, die z.B. dem Asphalt, einem Bitumen-Mineralstoff-Gemisch, der besonders für den Straßenbau verwendet wird, eine ausreichende Stabilität und Kälteflexibilität sowie eine hohe Dauerfestigkeit bei ständig steigenden Verkehrsbelastungen geben sollen. So kann der Polymerzusatz die sogenannte Plastizitätsspanne, d.i. die Differenz zwischen Erweichungspunkt und Brechpunkt, vergrößern. Eine Absenkung des Brechpunktes (DIN 52 012) und eine Erhöhung der Duktilität (DIN 52 013) durch Polymerzusatz zeigen bessere Kälteflexibilität an. Der Zweck der Polymeren als Bitumenadditive ist die Veränderung des elastoviskosen Verhaltens von Bitumen, das heißt, die Erweiterung seiner Plastizitätsspanne und Verbesserung der elastischen Rückstellung.

Neben Natur- und Synthesekautschuken wurden als Polymere, Duroplastharze und Thermoplaste als Bitumenverbesserer geprüft (Körner et al. Plaste und Kautschuk 24 (1977), 475 bis 478). Als Polymer-Bitumenzusätze werden derzeit vor allem Styrol/Butadien (SB)-, EPDM- und Ethylen/Vinylacetat (EVA)-Copolymere und insbesondere für Industriebitumen auch ataktisches Polypropylen technisch verwendet. Marktgängige polymermodifizierte Bitumina sind u.a. ® Caribit (SB, Shell), ® Olexobit (EPDM, BP), ® Styrelf (SB, Elf).

Auch Polymere auf Acrylsäureester- und Methacrylsäureester-Basis, insbesondere Polymere von Alkylmethacrylsäureestern (PAMA) sind als Bitumenverbesserungsmittel beschrieben. Eine breitere technische Verwendung haben diese Polymeren, trotz guter Erfüllung einer Reihe gestellter Anforderungen als Zusätze, vor allem wegen unzureichender Verbesserung der elastischen Rückstellung gebrauchsfertiger elastomermodifizierter Bitumina, bisher nicht gefunden.

So beschreibt die US-Patentschrift 2 420 082 bituminöse Mischungen aus Bitumen und 2 bis 5 % Poly-$C_8$-$C_{10}$-alkylmethacrylaten, ohne spezifische Angaben zu deren Molekulargewichten, wodurch die Duktilität des Bitumen verbessert wird.

Die US-Patentschrift 2 828 429 offenbart durch Zusatz von je 0,01 bis 0,5 % Kautschuk und Poly-$C_8$-$C_{24}$-alkyl(meth) acrylaten erhaltene bituminöse Mischungen mit verbesserter Duktilität. Die PAMA's haben Molekulargewichte von 5 000 bis 500 000.

Die deutschen Patentschriften DE-AS 12 40 773 und DE-OS 23 31 727 beschreiben ebenso mit Polymeren von Alkylmethacrylaten, ohne nähere und spezifische Angaben über diese Polymeren zu machen, verbesserte bituminöse Bindemittel für Straßendecken.

Weiter werden Polyalkyl(meth)acrylate bzw. Copolymerisate von Alkyl(meth)acrylaten als Bitumenverbesserungsmittel vorgeschlagen, in der DE-OS 25 09 473 ein bei Normaltemperatur festes, nicht klebriges Mischpolymerisat mit Molekulargewichten von 50 000 bis 500 000, das im wesentlichen aus Alkyl(meth)acrylaten mit Alkylgruppen, die mehr als 6 C-Atome enthalten, sowie aus 3 bis 20 Gew.-% Acrylsäure oder Methacrylsäure und aus 3 bis 20 Gew.-% basischen Stickstoff-haltigen Monomeren aufgebaut ist, und dazu in den deutschen Patentanmeldungen DE-OS 39 17 816 und DE-OS-39 25 827 solche, die vorteilhafter unter 2,8 Gew.-% einpolymerisierter Carbonsäuren und unter 2,8 Gew.-% einpolymerisierter basischer Stickstoffverbindungen enthalten. Aus der japanischen Patent-Offenlegungsschrift 52-141 829 sind stufenweise emulsionspolymerisierte Zusätze und aus der WP 88/07 067 Poly-$C_4$-$C_{20}$-Alkylmethacrylate mit Molekulargewichten von etwa 5 000 bis etwa 1 000 000 bekannt, und die in Mengen von 0,01 bis etwa 10 Gew.-% in dem modifizierten Bitumen enthalten sind.

Olefinische Copolymere, vor allem mit Acrylsäure bzw. Methacrylsäure als reaktionsfähigen Comonomeren aufgebaut, sind als Zusätze von bituminösen Stoffen in der deutschen Auslegeschrift 11 88 807 und in WP 87/04 174 beschrieben. Nach der deutschen Auslegeschrift wird ein so Carboxylgruppen-haltiges, kautschukartiges Butadien-Acrylnitril Copolymer bei der Vermischung mit dem bituminösen Stoff durch Zusatz eines Oxids eines zweiwertigen Metalls, vorzugsweise Zinkoxid, vernetzt. Nach der WO-Patentanmeldung können außer α-Olefin-Homopolymeren und α-Olefin-α,β-ungesättigte Carbonsäure-Copolymeren auch Ionomere des zuletzt genannten Copolymertyps als Bitumenzusätze verwendet werden. Diese Ionomeren haben aber sehr geringe Meltflowindices und sind wegen ihres vernetzten Zustandes nicht homogen in das bituminöse Material einarbeitbar.

Ionisch vernetzte, weitgehend homogen verteilte Poly(meth)acrylatsyteme in Bitumina lassen sich nach der deutschen Patentanmeldung DE-OS-40 06499 zweistufig durch Einarbeiten Säuregruppen-haltiger Polymerer und anschließendes Einarbeiten reaktiver Metallverbindungen erhalten. In EP-A-0 400 391 werden Poly(meth)acrylatsysteme als Bitumenzusätze beschrieben, die als essentielle Bestandteile 50 bis 100 Gew-% $C_8$ - bis $C_{26}$ - Alkyl(meth)acrylate, sowie gegebenenfalls 0 bis 30 Gew-% $C_1$ - bis $C_7$ - Alkyl(meth)acrylate und 0 bis 20 Gew-% weitere copolymerisierbare Verbindungen, insbesondere solche mit funktionellen Gruppen.

Voraussetzungen an die polymeren Additive für die technische Nutzung der Eigenschaftsverbesserungen in bituminösen Gemischen sind Oxidations- und Thermostabilität der Polymeren, ihre leichte Einarbeitbarkeit im Bitumen, die Kompatibilität mit unterschiedlichen Bitumensorten und die Stabilität der Bitumen-Polymer-Mischung über längere Zeiträume.

Die bekannten polymeren Bitumenadditive erweitern in ausreichendem Maße die Plastizitätsspanne in bituminösen Gemischen und in damit hergestellten Mineralabmischungen, d.h. Erweichungspunkt und Brechpunkt solcher Materialien werden vielfach durch die bekannten Polymerzusätze günstig beeinflußt.

Hohe Dauerfestigkeit und Elastizität der mit bituminösen Bindemitteln hergestellten Asphalte, welche durch die elastischen Eigenschaften der Bitumina bestimmt werden, sind, wie beispielsweise in der Praxis zum Teil stark verformte Asphalt-Straßendecken zeigen, in noch nicht genügenden bzw. guten Maßen vorhanden.

Von Nachteil ist insbesondere die Tatsache, daß mit den Bitumenadditiven des Standes der Technik in zahlreichen Bitumensorten bei der Heißlagerung Entmischungen in polymerreiche und polymerarme Phasen auftreten, d.h., daß die entsprechenden PmB nicht lagerstabil sind.

Die Technik verlangt in besonderem Maße Bitumenadditive, die mit den verschiedenstens Bitumentypen und -sorten verträglich sind und folglich universell eingesetzt werden können.

Aufgabe und Losung

Es war die Aufgabe, homogene und langzeitstabile, mit Poly(meth)acrylaten polymermodifizierte Bitumina (PmB) zu erhalten, die mit ihren mechanischen und thermischen Eigenschaften, beispielsweise der elastischen Rückstellung (ER), der Kälteflexibilität, oder dem Erweichungspunkt, ein gutes technisches Verhalten zeigen, und vor allem war es die Aufgabe eine für alle Bitumensorten homogene Poly(meth)acrylat Polymermodifizierung mit hohen technischen Erwartungen zu finden.

Es wurde überraschenderweise gefunden, daß mit reaktiven, gut einarbeitbaren Polyalkyl(meth)acrylaten bestimmter Zusammensetzungen und durch deren Vernetzung im Bitumen, gute Homogenität aufweisende, d.h. bei der Heißlagerung sich nicht entmischende PmB hergestellt werden können, in denen sowohl die elastischen als auch die thermischen Eigenschaften des Bitumens und damit bituminöser Zusammensetzungen wesentlich verbessert sind.

Die neuen PmB werden erfindungsgemäß durch Einarbeitung von Polyalkyl(meth)acrylat, enthaltend zu kovalenten Vernetzungsreaktionen geeignete reaktive Gruppen, und anschließende kovalente Vernetzung des Polymeren durch intermolekulare Reaktionen der reaktiven Gruppen des Polyalkyl(meth)acrylats, oder durch dessen Vernetzung über weitere, dem Bitumen zugesetzte, mindestens bifunktionelle, mit den reaktiven Gruppen des Polyalkyl(meth)acrylats reagierende Substanzen, erhalten. Diese mehrfunktionellen reaktiven Substanzen können niedermolekulare Verbindungen oder selbst wieder Polymere sein.

Die kovalenten Vernetzungen nach Einarbeitung des Bitumenmodifiers und gegebenenfalls der mehrfunktionellen reaktiven Substanzen, werden durch übliche Maßnahmen, wie vor allem durch Erhitzen und/oder durch Zusatz von Katalysatoren, in dem zu modifizierenden Bitumen erreicht.

Gegenstand der Erfindung ist danach:

Homogenes, d.h. gegen Entmischung bei der Heißlagerung stabiles polymermodifiziertes Bitumen mit hoher elastischer Rückstellung, guter Kälteflexibilität und hoher thermischer Stabilität, mit einem Gehalt von 0,5 bis 50 Gew.-% an Polymerbestandteilen, wobei diese Polymerbestandteile mindestens zu 20 Gew.-% Polyalkyl(meth)acrylate sind,

dadurch gekennzeichnet,

daß das Polyalkyl(meth)acrylat in Anteilen von 50 bis 99,8 Gew.-% aus $C_6$- bis $C_{28}$-Alkyl(meth)acrylaten, in Anteilen von 0,2 bis 30 Gew.-% aus polymerisierbaren Monomeren mit mindestens einer weiteren reaktiven Gruppe und in Anteilen von 0 bis 49,8 Gew.-% aus einer oder mehreren anderen Verbindungen mit nicht mehr als einer polymerisierbaren Doppelbindung, aufgebaut und in dem Bitumen gleichmäßig verteilt ist, und dessen Polymermoleküle durch Reaktionen der funktionellen Gruppen in den Polymeren untereinander, oder durch Reaktionen dieser mit einem eingebrachten mehrfunktionellen reaktiven Zusatz, ausgewählt aus der Gruppe des niedermolekularen organischen Verbindungen und der Gruppe der Polyalkylenetherglykole, Polyalkylenetheramine oder Polyalkylenetheraminoalkohole, im Bitumen kovalent vernetzt wurden.

Die Alkyl(meth)acrylatcopolymerisate und/oder auch Gemische von Copolymerisaten der erfindungsgemäßen Zusammensetzungen können sowohl als Lösung, z.B. in einem geeigneten Mineralöl, als wäßrige Emulsion oder in reiner Form dem Bitumen oder bituminösen Gemisch zugesetzt werden. Die reaktiven mehrfunktionellen Vernetzungszusätze können als solche oder in Form von Lösungen eingearbeitet werden.

Zwar läßt sich wie aus dem Stand der Technik bekannt, durch Zusatz von Polyalkyl(meth)acrylaten, welche Molekulargewichte im Bereich von 50 000 bis 1 000 000 haben, in polymermodifizierten Bitumina die Kälteflexibiltät, was in den Kenndaten von Brechpunkt und Duktilität zum Ausdruck gebracht wird, verbessern, in nicht ausreichendem Maße jedoch die elastische Rückstellung, wodurch in verarbeiteten Bitumenmassen bleibende Verformungen, z.B. in Abdichtringen oder in Straßenbelägen hingenommen werden müssen, die ihrerseits hohe, beispielsweise verkehrssicherheitstechnische, Risiken in sich bergen.

Die deutsche Spezifikation der technischen Lieferbedingungen für gebrauchsfertige polymermodifizierte Bitumen, T1 PmB 88, Teil 1, Fassung vom 30.12.1988, stellt an die verschiedenen PmB-Sorten Anforderungen an die elastische Rückstellung von mindestens 50 %.

Zum Nachweis der elastischen Eigenschaften gebrauchsfertiger elastomermodifizierter Bitumen wird die Prüfung der elastischen Rückstellung (ER) nach dem Halbfadenverfahren im Duktilometer wie folgt in Anlehnung an DIN 52 013 bei 25 Grad C durchgeführt:

Abweichend von DIN 52 013 werden die Probekörper nur bis zu einer Fadenlänge von 20 cm ausgezogen und der Faden nach Arretierung des Vorschubs innerhalb 10 s mit einer Schere in Fadenmitte in zwei Halbfäden getrennt. Die elastische Rückstellung ist definiert als der Abstand, der sich nach 30 min zwischen den beiden Halbfäden einstellt. Sie wird angegeben in %, bezogen auf die Ausgangsdehnung.

Zum Nachweis der Homogenität wird die Stabilität gegen Entmischung bei Heißlagerung gebrauchsfertiger polymermodifizierter Bitumen nach folgendem Untersuchungsgang, dem sogenannten Tubenverfahren (T1 PmB) bestimmt:

Etwa 75 g polymermodifiziertes Bitumen werden blasenfrei in eine unlackierte Aluminiumtube von 3 cm Durchmesser und 16 cm Zylinderhöhe bis zu 2/3 ihrer Höhe eingegossen. Ehe das Prüfgut ganz erkaltet ist, wird das offene Tubenende so zusammengedrückt und mehrfach dicht verfalzt, daß keine Luft eingeschlossen wird. Die so luftfrei und luftdicht verschlossene Tube wird senkrecht stehend 3 Tage bei 180 Grad C gelagert.

Nach dem Abkühlen auf Zimmertemperatur wird die Tube mit geeigneten Verfahren so weit abgekühlt, bis das Prüfgut aus dem Aluminiummantel geschält werden kann.

Der Prüfling wird nach der Höhe gedrittelt. An den unteren und oberen Probenteilen werden die Erweichungspunkte Ring und Kugel (RuK-EP, DIN 52 011) bestimmt. Abweichend von DIN 52 003 wird für die Erweichungsbestimmung die verfügbare Probemenge von jeweils 25 g Bitumen für ausreichend angesehen.

Ein PmB ist stabil gegen Entmischung zu beurteilen, wenn die Differenz des RuK-EP des oberen und unteren Drittels kleiner als 2 K beträgt.

Die Beispiele mit Vergleichswerten nach dem Stand der Technik belegen die hohen elastischen Rückstellungen und die hohen Homogenitäten, d.h. guten Lagerstabilitäten in den erfindungsgemäßen PmB (Zusammenstellung der Meßmethoden und der Wertetabellen in Teil B der experimentellen Ausführungen).

Der Aufbau der erfindungsgemäßen Copolymerzusätze mit (Meth)acrylsäureestern gewährt gute Löslichkeit, d.h. auch leichte Einarbeitbarkeit in praktisch allen Bitumensorten und gute Kälteflexibilität sowie gute Oxidationsbeständigkeit der erfindungsgemäßen PmB.

Durchführung der Erfindung

Für die Herstellung der erfindungsgemäß zu verwendenden (Meth)acrylsäurealkylestercopolymerisate werden langkettige Alkylester der Acrylsäure und/oder vor allem der Methacrylsäure mit $C_6$- bis $C_{28}$-, insbesondere mit $C_8$- bis $C_{20}$-Alkylresten, vorteilhaft mit $C_{10}$- bis $C_{18}$-Alkylresten in der Estergruppe als Monomere verwendet.

Beispiele für solche Ester sind n-Hexylmethacrylat, n-Octylmethacrylat, 2-Ethylhexylacrylat, 2-Ethylhexylmethacrylat, n-Decylmethacrylat, Isodecylacrylat, Isodecylmethacrylat, Dodecylmethacrylat, Octadecylacrylat, Octadecylmethacrylat, Eicosylmethacrylat, Tricosylmethacrylat, wobei die für die Esterherstellung verwendeten langkettigen Alkohle bevorzugt als synthetische Alkohle eingesetzt werden, und welche meist Gemische verschiedener Alkohole, insbesondere im $C_8$- bis $C_{26}$-Bereich darstellen. Solche Alkohole sind im Handel beispielsweise unter den Markennamen Lorol®, Alfol®, Dobanol®, Behenyl-SR® bekannt. Ein beispielsweise für die Herstellung von Isodecylmethacrylat brauchbarer technischer Alkohl ist ein Gemisch aus isomeren Isodecylalkoholen mit einer mittleren C-Zahl (C) = 9,9 - 10,3.

Comonomere, die die für die Vernetzungsreaktionen notwendigen reaktiven Gruppen in das Bitumenmodifizierende Polyalkyl(meth)acrylat einbringen, sind vor allem wieder Acryl- und/oder Methacrylverbindungen. Es können aber auch andere, reaktive Gruppen enthaltende polymerisierbare Vinylverbindungen, wie z.B. entsprechend substituierte Styrolverbindungen, und gegebenenfalls substituierte Vinylacylate oder auch Maleinsäure, Itakonsäure oder deren Anhydride, oder Crotonsäure, als Comonomere Verwendung finden.

Reaktive Gruppen, vor allem als Seitengruppen in den Polyalkyl(meth)acrylaten enthalten, sind vor allem alkoholische Gruppen, Aminogruppen, Säuregruppen, Säureanhydridgruppen, Epoxygruppen, Aziridingruppen, Methylolethergruppen, Isocyanatgruppen, Silangruppen oder zu Diels-Alder-Reaktionen befähigte Gruppen, wie Furfuryl-, Cycopentadienyl- oder Maleinimidgruppen. Die Polyalkyl(meth)acrylate enthalten für die vorgesehenen und erfindungsgemäßen Vernetzungsreaktionen entweder mindestens eine Art der reaktiven Gruppen, falls diese mit sich selbst reagieren können, bzw. mindestens zwei Arten reaktiver Gruppen oder für Vernetzungsreaktionen über einen weiter eingebrachten mehrfunktionellen, reaktiven Zusatz, ausgewählt aus der Gruppe der niedermolekularen organischen Verbindungen und der Gruppe der Polyalkylenetherglykole, Polyalkylenetheramine oder Polyalkylenetheraminoalkohole, die mit den reaktiven Gruppen des mehrfunktionellen Zusatzes reagieren.

Die reaktiven Acryl-, Methacryl- und Styrolcomonomeren lassen sich durch die allgemeine Formel I

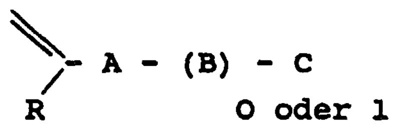

I

beschreiben, in der

R = H, $CH_3$,

A = 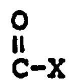

mit X = 0 oder $NR_1$ ist, wobei $R_1$ = H oder ein $C_1$- bis $C_{10}$-Alkyl- oder Arylrest ist, oder = $C_6H_4$

B im Falle

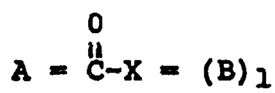

= Alkylen oder Arylen oder Alkylenarylen mit 1 bis 10 C-Atomen und

C = OH, $NHR_1$ mit der oben angegebenen Bedeutung von $R_1$, COOH, $SO_3H$,

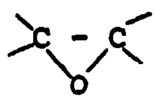 , 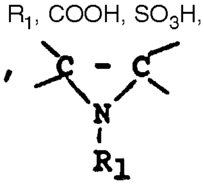

mit $R_1$ wie oben, $CH_2$-O-$R_1$ mit $R_1$ wie oben, NCO, Si (H, $R_1$ oder $OR_1$)$_3$ mit $R_1$ wie oben angegeben, oder

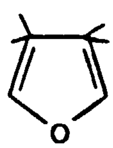 , 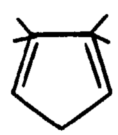 , 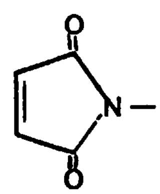

sind.

Die Bitumen-modifizierenden, polyfunktionellen Polyalkyl(meth)acrylate sind aus 50 bis 99,8 Gew.-%, vor allem aus 60 bis 99,5 Gew.-% und insbesondere aus 80 bis 99 Gew.-% der langkettigen $C_6$-bis $C_{26}$-Alkylester der Acrylsäure und/oder vor allem der Methacrylsäure aufgebaut, wobei diese vorteilhaft Gemische verschiedener $C_6$- bis $C_{28}$-Alkylester sind.

Die reaktiven Comonomeren sind in Mengen von 0,2 bis 30 Gew.-%, vor allem von 0,2 bis 20 Gew.-%, insbesondere von 0,5 bis 10 Gew.-% und besonders bevorzugt 0,75 bis 5 Gew.-% dieser funktionellen Monomerart, in dem Copolymerisat bzw. den zu mischenden Copolymerisaten eingebaut.

Reaktive Comonomere sind Wasserstoff-aktive Verbindungen, wie beispielsweise 2-Hydroxyethylacrylat, 2-Hydroxyethylmethacrylat, 2-Hydroxypropylmethacrylat, 2-tert.-Butylaminoethylmethacrylat, Acrylsäure, Methacrylsäure,

Maleinsäure, Maleinsäuremonomethylester, Itakonsäure, 2-Sulfonsäureethylmethacrylat, 2-Sulfonsäureethylmethacrylamid, 2-Acrylamido-2-methylpropansulfonsäure, Styrolsulfonsäure, weiter Monomerverbindungen, deren reaktive Gruppen insbesondere durch Wasserstoff-aktive Gruppen bei der Vernetzungsreaktion (Additionsreaktion) angegriffen werden, wie beispielsweise Glycidylacrylat, Glycidylmethacrylat, analoge Verbindungen mit einer Aziridinylgruppe, Acryl-, Methacryl- und Styrolverbindungen, die Isocyanatgruppen enthalten und Monomerverbindungen deren reaktive Gruppen eine Kondensationsreaktion mit im wesentlichen Wasserstoffaktiven Gruppen unter Eliminieren meist kleiner Moleküle, wie Wasser, Methanol, Ethanol, Butanol oder dergleichen eingehen, wozu beispielsweise N-Methoximethylmethacrylamid, N-Butoximethylmethacrylamid, 2-Methacrylamidoglykolsäureethylester, O-Methylacrylamidoglykolsäuremethylester, γ-Methacryloyloxipropyltrimethoxisilan gehören. Polyalkyl(meth)acrylate mit Trialkoxisilan-Gruppen als reaktive Gruppen können im Bitumen erfindungsgemäß auch selbstvernetzend weiter umgesetzt werden. Für die kovalente Vernetzung über eine Diels-Alder-Reaktion eignet sich insbesondere Furfurylmethacrylat als Comonomeres, dessen Furfurylgruppe beispwielsweise mit Maleinimidgruppen enthaltenden Verbindungen leicht Addukte bildet.

Zur Vernetzungsreaktion zwischen den Polyalkyl(meth)acrylat-Molekülen enthalten die Polymeren, die in den Bitumen eingebracht werden, entsprechend miteinander reagierende Gruppen in etwa praktisch äquivalenten Mengen.

Die Vernetzungsreaktion zwischen den Polyalkyl(meth)acrylat-Molekülen im Bitumen kann aber auch dadurch erreicht werden, daß außer dem Polyalkyl(meth)acrylat-Zusatz, wobei dieser im wesentlichen nur eine Art reaktiver Gruppe enthält, eine mindestens bifunktionelle organische Verbindung, ausgewählt aus der Gruppe der niedermolekularen organischen Verbindungen und der Gruppe Polyalkylenetherglykole, Polyalkylenetheramine oder Polyalkylenetheraminoalkohole, die die mit den reaktiven Gruppen des Polyalkyl(meth)acrylats in Reaktion tretenden Gruppen enthält, eingearbeitet wird.

Reaktive Gruppen der Vernetzerzusätze sind vor allem alkoholische- bzw. phenolische-OH-Gruppen, Aminogruppen, Säuregruppen, Säureanhydridgruppen, Maleinimidgruppen, Epoxygruppen, Aziridingruppen, Methylolethergruppen, Isocyanatgruppen, Silangruppen. Die mit dem Poly(alkyl)methacrylat reagierenden Zusätze enthalten mindestens eine Art reaktiver Gruppen, die mit den reaktiven Gruppen des Polyalkyl(meth)acrylats zur Reaktion befähigt sind.

Diese zur Vernetzung zugesetzten polyfunktionellen organischen Verbindungen können niedermolekulare aliphatische oder aromatische Verbindungen, wie Diole, z.B. Tetramethylendiol, Dodecandiol, wie Triole, z.B. Trimethylolpropan, wie Diamine, z.B. Hexamethylendiamin, p-Phenylendiamin oder Polyamine, wie polyfunktionelle Maleinimide, beispielsweise N,N'-Bis(1,12-maleinimido)dodecan, wie Diisocyanate oder Triisocyanate, beispielsweise Diphenyl-4,4'-diisocyanat, wie bifunktionelle Glycidylverbindungen, z.B. Bisphenol-A-diglycidylether, wie Dicarbonsäuren, z.B. Adipinsäure, Terephthalsäure, wie Polycarbonsäuren, z.B. Trimellithsäure bzw. Trimellithsäureanhydrid oder auch Verbindungen mit verschiedenen reaktiven Gruppen, wie Aminoalkohole, z.B. Ethanolamin, oder p-Aminophenole sein. Die Vernetzerkomponenten können auch Polyalkylenetherglykole, Polyalkylenetheramine oder Polyalkylenetheraminoalkohole sein, vorzugsweise mit Molekulargewichten Mw > 500, beispielsweise mit Mw zwischen 2000 und 4000. Die Menge der eingearbeiteten Vernetzerkomponente soll gemessen an den reaktiven Gruppen der Polyalkyl(meth) acrylate, diesen äquivalent sein.

In Anteilen von 0 bis 49,8 Gew.-%, besonders in Anteilen von 0 bis 30 Gew.-% können die Copolymerisate mit einer oder mehreren anderen copolymerisierbaren Verbindungen mit einer Doppelbindung aufgebaut sein. Als nicht essentiell notwendige aber brauchbare Monomere für die Herstellung des erfindungsgemäß einzusetzenden Copolymeren seien beispielhaft genannt Acrylsäure- und/oder Methacrylsäureester von $C_1$- bis $C_5$-Alkoholen, wie Methylmethacrylat, Isobutylmethacrylat, n-Butylacrylat, Isoamylmethacrylat, n-Pentylacrylat, aber auch Cyclopentylmethacrylat, Cyclohexylmethacrylat oder -acrylat, Tetrahydrofurfurylmethacrylat, mehrfach alkoxilierte Methacrylsäureester, weiter Acrylnitril, Acrylamid, Methacrylamid, Styrol, Vinylacetat und vor allem Stickstoff-enthaltende, basische polymerisierbare Verbindungen, die insbesondere in Mengen von 0 bis 10 Gew.-% in dem Polyalkyl(meth)acrylat-Zusatz einpolymerisiert sind.

Als mögliche basische monomere Verbindungen sind solche mit tertiären Amino- oder Amidogruppen oder mit basischen heterocyklischen Gruppen zu nennen.
Monomere mit einem basischen Stickstoffatom sind die Dialkylaminoalkylester oder die Dialkylaminoalkylamide der Acryl- oder Methacrylsäure, insbesondere solche mit insgesamt 7 bis 16 Kohlenstoffatomen, und entsprechende N-Alkylacrylamide oder -methacrylamide. Als Beispiele seien dazu Dimethylaminoethylacrylat oder -methacrylat, Dimethylaminopropylacrylat oder -methacrylat Dimethylaminobutylacrylat oder -methacrylat, N-Methylacrylamid, N-Methylmethacrylamid, Dimethylaminoethylacrylamid oder -methacrylamid und solche Ester oder Amide genannt, die anstelle einer Dimethylaminogruppe eine Diethylamino-, Dipropylamino-, Dibutylamino-, Methylethylamino-, Methylbutylamino, Morpholino- oder Piperidinogruppe enthalten. Zu geeigneten Stickstoff-haltigen Monomeren gehören weiterhin Vinylpyrrolidon, Vinylpyridin, Vinylimidazol, Vinylimidazolin, Vinylpyrazolon, Vinylpiperidin, sowie die Acryl- oder Methacrylsäureester von Imidazolyl-Alkanolen oder Imidazolinyl-Alkanolen.

Zur Einarbeitung der die elastische Rückstellung verbessernden Polymerkomponenten in die Bitumina, lassen sich die reaktiven Polyalkyl(meth)acrylate in Lösung, solche vor allem in einem geeigneten Mineralöl, z.B. einem höher

viskosen naphthenbasischen Schmieröl, oder in wäßriger Emulsion oder in reiner Form dem Bitumen zusetzen. Die Herstellung der erfindungsgemäß zu verwendenden Polyalkyl(meth)acrylate kann daher nach den üblichen Verfahren durch vornehmlich radikalische Polymerisation der Monomeren in Lösung oder in Emulsion, aber auch in Substanz vorgenommen werden (vgl. H. Rauch-Puntigam, Th. Völker, Acryl- und Methacrylverbindungen, Springer-Verlag, Berlin, 1967, insbesondere Seiten 203, 207 230 - 233, 238, 327).
Die Molekulargewichtseinstellung, wobei $\overline{Mw}$ für die erfindungsgemäß zu verwendenden Polyalkyl(meth)acrylate insbesondere über $10^4$, vor allem > 3 mal $10^4$ sein soll, wird in der Regel durch die Menge des die Polymerisation auslösenden Initiators im Verhältnis zu den polymerisierbaren Monomeren oder der Mitverwendung eines Reglers, z.B. eines Alkylmercaptans bestimmt und wird nach bekannten Methoden (loc.cit. H. Rauch-Puntigam). durchgeführt. Die Molekulargewichte $\overline{Mw}$ in g/mol der erhaltenen Polymerisate können nach der Methode der Lichtstreuung (Ullmanns Encyklopädie der techn. Chemie, 4. Auflage, Band 15, Seiten 385 bis 387) gemessen werden oder lassen sich nach der Eichbeziehung $\eta_{sp/c}$ = 0,0156 x Mw 0,645 abschätzen, wobei die Viskositäten nach DIN 7745 mit Chloroform als Lösungsmittel bei 20 Grad C gemessen werden.

Den Bitumina werden zur erfindungsgemäßen Modifizierung Polyalkyl(meth)acrylate mit reaktiven Gruppen im Molekül und mit Molekulargewichten vor allem größer $10^4$ in Abhängigkeit vom PmB-Einsatzgebiet in Mengen von 0,5 bis 50 Gew.-%, vorzugsweise 0,5 bis 20 Gew.- %, vor allem von 1 bis 15 Gew.-% und insbesondere in Mengen von 2 bis 10 Gew.-% zugesetzt.

Die Zugabe der mindestens bifunktionellen reaktiven Vernetzerkomponeten mit Molekulargewichten vor allem im Bereich von 50 bis 5000 g/mol zum polymerzumodifizierenden Bitumen wird vor allem als Substanzzugabe oder als Lösung vorgenommen.

Neben den erfindungsgemäß notwendigen Polyalkyl(meth)acrylaten können die erfindungsgemäßen polymermodifizierten Bitumina andere als Veredlungskomponenten für bituminöse Bindemittel und Gemische bekannte polymere Verbindungen, wie beispielsweise Polyolefine (Polyethylen, Polypropylen), Ethylen-Vinylacetat-Copolymere oder Acrylnitril-Butadien-Styrol-Copolymere, enthalten, wobei das Gewichtsverhältnis Alkyl(meth)acrylat-Polymer zu Nicht-Alkyl(meth)acrylat-Polymer = 1 : 0 bis 1 : 4 sein kann.

Die reaktiven Polyalkyl(meth)acrylate bringen nach deren erfindungsgemäßer kovalenter Vernetzung in Bitumenkompositionen, die durch Prüfung nach Heißlagerung bei 180 Grad C (Tubentest), erfindungsgemäße homogene PmB sind, Verbesserungen der elastischen Rückstellungen von Werten von etwa 30 - 55 % nach dem Stand der Technik auf Werte bis etwa 56 - 90 %.
Einzelne reaktive Metallverbindungen, wie beispielsweise NaOH, KOH, CaO, $Ca(OH)_2$, Al-triisopropylat, NaOH+$AlCl_3$-Kombinationen, $Zn(acetat)_2$, $Zn(OH)NO_3$, BiOCl, $SbO(NO_3)$, Naphthenate von z.B. Cu, Fe, Pb, Co oder Phenolate wie z.B. Ca-sulfidiertes Alkylphenolat in Mineralöl (Oloa 219 ®) können in geringen Mengen den Bitumen-Polymer-Mischungen zugegeben werden, wobei sie als Katalysatoren bei den Vernetzungsreaktionen wirken, aber auch in untergeordnetem Maße zu ionisch vernetzten Anteilen im Polymernetzwerk beitragen können.

Die Zugabe der reaktiven Polymerverbindungen und gegebenenfalls der reaktiven Vernetzerzusätze in die weitgehend homogenen Bitumina erfolgt im Temperaturbereich von ca. 60 Grad C bis etwa 250 Grad C, insbesondere im Temperaturbereich von 120 bis 180 Grad C und bei Gußasphalten bei Temperaturen > 200 Grad C und im Falle von Bitumenlösungen auch unter 60 Grad C bis 0 Grad C, z.B. 10 bis 30 Grad C, wobei diese unter gutem Mischen in trockener Form oder in Form von wäßrigen oder organischen Lösungen oder in dispergierter Form - z.B. in Mineralöl - eingearbeitet werden. Dabei steigt in Abhängigkeit von der Temperatur, der Mischungszeit und gegebenenfalls durch Anwesenheit eines Katalysators, wie das aus analogen Reaktionen mit Verbindungen entsprechender reaktiver Gruppen wohl bekannt ist, die Viskosität des so modifizierten Bitumens deutlich an.
Unter Bitumen werden im Sinne der vorliegenden Erfindung alle z.B. im Straßenbau oder im Dachbahnenbau oder als Verguß-, Dichtungs- oder Anstrichmassen gebräuchlichen Bitumina verstanden.

In den anschließenden Beispielen ist die Herstellung von reaktiven PAMA's und die Herstellung erfindungsgemäßer Bitumen-Polymer-Mischungen (PmB) und ihre ermittelten Eigenschaften, im Vergleich mit solchen entsprechend dem Stand der Technik, beschrieben.

BEISPIELE

A. Synthese der Poly(meth)acrylate

Beispiele 1 - 3:

Herstellung von Copolymeren des Glycidylmethacrylates

In einem 1 1-4-Halsrundkolben mit Säbelrührer, Rückflußkühler und Innenthermometer wurden naphthenbasisches Öl, Isodecylmethacrylat und Glycidylmethacrylat unter Rühren auf 75 Grad C erwärmt. Nach Erreichen dieser

Temperatur wurde mit einem Gemisch von 0,135 g tert.-Butylperpivalat und 0,135 g tert.-Butylperbenzoat die Reaktion gestartet. Nach Erreichen der Temperaturspitze wurde die Polymerisationstemperatur auf 130 Grad C erhöht! Nach 2 (P1) bzw. 4 Stunden (P2, P3) Reaktionszeit wurde mit 173,6 g naphthenbasischem Öl verdünnt. 5 Stunden nach Reaktionsbeginn wurde durch Zugabe von 0,68 g tert.-Butylperbenzoat nachpolymerisiert
Die Gesamtpolymerisationsdauer betrug 16 Stunden. Es wurde eine klare, rotbraune, viskose Lösung mit 50 Gew.-% Polymerisatgehalt erhalten.

| Polymer | Einwaage der Methacrylate | Einwaage Öl | $\eta_{sp/c}$ (20°C, $CHCl_3$) |
|---|---|---|---|
| P1 | 324,9 g Isodecylmethacrylat | 342 g | 69 |
| | 17,1 g Glycidylmethacrylat | | |
| P2 | 324,9 g Isodecylmethacrylat | 342 g | 128 |
| | 17,1 g Glycidylmethacrylat | | |
| P3 | 333,5 g Isodecylmethacrylat | 342 g | 102 |
| | 8,5 g Glycidylmethacrylat | | |

Beispiele 4 - 6:

Herstellung von Copolymeren des Maleinsäureanhydrids

In einem 1 1-4-Halsrundkolben mit Säbelrührer, Rückflußkühler und Innenthermometer wurden naphthenbasisches Öl, Isodecylmethacrylat Maleinsäureanhydrid unter Rühren auf 75 Grad C erwärmt. Nach Erreichen dieser Temperatur wurde mit einem Gemisch von 0,135 g tert.-Butylperpivalat und 0,135 g tert.-Butylperbenzoat die Reaktion gestartet. Nach Erreichen der Temperaturspitze wurde die Polymerisationstemperatur auf 130 Grad C erhöht. 5 Stunden nach Reaktionsbeginn wurde durch Zugabe von 0,68 g tert.-Butylperbenzoat nachpolymerisiert. Nach Polymerisationsende wurde mit 173,6 g naphthenbasischem Öl verdünnt. Die Gesamtpolymerisationsdauer betrug 16 Stunden. Man erhielt eine klare, rotbraune, viskose Lösung mit 50 Gew.-% Polymerisatgehalt.

| Polymer | Einwaage der Methacrylate | Einwaage Öl | $\eta_{sp/c}$ |
|---|---|---|---|
| P4 | 324,9 g Isodecylmethacrylat | 342 g | 70 |
| | 17,1 g Maleinsäureanhydrid | | |
| P5 | 335,2 g Isodecylmethacrylat | 342 g | 78 |
| | 6,8 g Maleinsäureanhydrid | | |
| P6 | 338,6 g Isodecylmethacrylat | 342 g | 81 |
| | 3,4 g Maleinsäureanhydrid | | |

Beispiele 7 - 8

Herstellung von Copolymeren des Methacryloyloxypropyltrimethoxysilan

In einem 1 1-4-Halsrundkolben mit Säbelrührer, Rückflußkühler und Innenthermometer wurden 60 g naphthenbasisches Öl, Isodecylmethacrylat und gamma-Methacryloyloxypropyltrimethoxysilan unter Rühren auf 85 Grad C erwärmt. Nach Erreichen dieser Temperatur wurde mit 0,68 g tert.-Butylperoctoat die Reaktion gestartet. 1 Stunde nach Reaktionsbeginn wurde mit 280 g naphthenbasischem Öl verdünnt. 5 Stunden nach Reaktionsbeginn wurde durch Zugabe von 0,68 g tert.-Butylperoctoat nachpolymerisiert. Die Gesamtpolymerisationsdauer betrug 16 Stunden. Man erhielt eine klare rotbraune, viskose Lösung mit 50 Gew.-% Polymerisatgehalt.

| Polymer | Einwaage der Methacrylate | Einwaage Öl | $\eta_{sp/c}$ |
|---|---|---|---|
| P7 | 336,6 g Isodecylmethacrylat | 340 g | 92 |
| | 3,4 g gamma-Methacryloyloxypropyltrimethoxysilan | | |
| P8 | 329,8 g Isodecylmethacrylat | 340 g | 123 |
| | 10,2 g gamma-Methacryloyloxipropyltrimethoxysilan | | |

B. Herstellung und Prüfung polymermodifizierter Bitumina

Allgemeine Vorschrift zur Herstellung polymermodifizierter Bitumina

Ein handelsübliches Normenbitumen wurde in einem Kolben mit Säbelrührer auf 150 Grad C erwärmt. Bei dieser Temperatur wurde die gewünschte Menge des jeweiligen Polymerisates zugegeben und 1 Stunde lang gerührt. Nach dieser Zeit war das Polymerisat jeweils vollständig eingearbeitet, das erhaltene polymermodifizierte Bitumen war homogen und glatt. Anschließend wurde der erfindungsgemäße Vernetzer und gegebenenfalls ein Katalysator zugefügt und es wurde eine weitere Stunde gerührt. Die Viskosität des so modifizierten Bitumens stieg an, unter bestimmten Bedingungen wurden gelähnliche Bitumen-Polymer-Mischungen erhalten. Im Falle selbstvernetzender Polymerer wurde nach der Einarbeitung des Polymeren ohne weitere Zusätze 5 Stunden lang bei 150 Grad C gerührt.

Folgende erfindungsgemäße Stoffe wurden als Vernetzer eingesetzt:

V1 Hexamethylendiamin
V2 Dodecandiol
V3 Jeffamine D-400® (Texaco Chemicals) = Polyoxyalkyleneamine $H_2N-(CH_2-CH_2-O)_n-CH_2-CH_2-NH_2$, mittleres Molekulargewicht 4000
V4 Jeffamine D-2000 ®, wie V3, jedoch mittleres Molekulargewicht 2000

Als Katalysator wurde in einigen Beispielen Methansulfonsäure (MSS) verwendet.

Zum Vergleich enthalten die Beispiele auch Daten von Bitumina, denen nur ein Polymeres zugesetzt wurde, nicht jedoch der erfindungsgemäße Vernetzer bzw. in denen nicht thermisch nachvernetzt wurde.

RuK-EP = Erweichungspunkt Ring und Kugel, DIN 52 011
ER = Elastische Rückstellung, Duktilometer-Methode, DIN 52 013
Pene = Nadelpenetration, DIN 52 010
BP = Brechpunkt nach Fraas, DIN 52 012
Homo = Homogenität nach Heißlagerung bei 180 Grad C (Tubentest), gemäß folgender Vorschrift (TL Pmb) (s.S.9)

Beispiel 1

Destillationsbitumen B80 einer deutschen Raffinerie Ruk-EP = 47 Grad C, ER = 13 %

| Bitumen | Polymer | Vernetzer | RuK-EP (Grad C) | ER (%) | Homo (K) | Bemerkung |
|---|---|---|---|---|---|---|
| 1 000 g | 80 g P3 | | | 40 | | |
| 1 000 g | 80 g P2 | | 47,0 | 60 | | |
| 1 000 g | 80 g P2 | 0,92 g V1 | 52,8 | 84 | 1,1 | |
| 1 000 g | 80 g P1 | 0,92 g V1 | | 59 | 0,7 | |
| 1 000 g | 80 g P2 | 1,44 g V2 | | 71 | 0,3 | + 0,6 g MSS |
| 1 000 g | 80 g P2 | 14,1 g V4 | 50,0 | 84 | 2,0 | |
| 1 000 g | 80 g P2 | 28,2 g V3 | 48,5 | 84 | 2,0 | |
| 1 000 g | 80 g P1 | 28,2 g V3 | 47,0 | 80 | 0,3 | |
| 1 000 g | 80 g P1 | 11,3 g V3 | | 61 | 0,9 | |
| 1 000 g | 80 g P3 | 28,2 g V4 | 47,5 | 56 | 1,0 | |

Beispiel 2

Destillationsbitumen B80 einer deutschen Raffinerie RuK-EP: 47 Grad C, ER = 13 %

| Bitumen | Polymer | Vernetzer | RUK-EP (Grad C) | ER (%) | Homo (K) |
|---|---|---|---|---|---|
| 1 000 g | 80 g P4 | 0,53 g V1 | | 63 | |
| 1 000 g | 80 g P4 | 16,30 g V3 | | 85 | |
| 1 000 g | 80 g P6 | | | 28 | |
| 1 000 g | 80 g P6 | 32,60 g V3 | | 74 | |
| 1 000 g | 80 g P6 | 81,70 g V3 | | 90 | |
| 1 000 g | 80 g P5 | | | 28 | |
| 1 000 g | 80 g P5 | 32,6 g V3 | | 72 | 0,1 |

Beispiel 3

Destillationsbitumen B80 einer deutschen Raffinerie RuK-EP = 47 Grad C, ER = 13 %. Die Polymeren wurden wie oben beschrieben eingearbeitet und anschließend noch 5 Stunden bei 150 Grad C gerührt.

| Bitumen | Polymer | ER (%) | Homo (K) |
|---|---|---|---|
| 1 000 g | 80 g P1 | 71 | 1,1 |
| 1 000 g | 80 g P2 | 86 | 1,9 |

Beispiel 4

Destillationsbitumen B80 einer deutschen Raffinerie RuK-EP = 49 Grad C, ER = 17 %

| Bitumen | Polymer | ER (%) | Homo (K) |
|---|---|---|---|
| 1000 g | 80 g P2 | 73 | 0,8 |

Beispiel 5

In 1 000 g eines Destillationsbitumen B200 einer deutschen Raffinerie mit RuK-ER = 40 Grad C wurden 80 g des Polymeren P8 durch einstündiges Rühren bei 120 Grad C eingearbeitet. Die Viskosität des Bitumens betrug danach 480 mPa s (bei 120 Grad C). Nach einer weiteren Stunde bei 120 Grad C war die Viskosität des Bitumens auf 1 800 mPa-S (bei 120 Grad C) angestiegen.

Beispiel 6

1 000 g eines Destillationsbitumen B200 einer deutschen Raffinerie (RuK-EP = 40 Grad C) wurden mit 80 g des Polymeren P7 versetzt, welches nach einstündigem Rühren bei 120 Grad C vollständig eingearbeitet war (RuK-EP = 41 Grad C). Anschließend wurde 20 Stunden bei 120 Grad C im verschlossenen Kolben gelagert. Der RuK-EP war auf 50 Grad C angestiegen.

**Patentansprüche**

1. Gegen Entmischung bei der Heißlagerung stabiles, polymermodifiziertes Bitumen mit hoher elastischer Rückstellung, guter Kälteflexibilität und hoher thermischer Stabilität, mit einem Gehalt von 0,5 bis 50 Gew.-% an Polymerbestandteilen, wobei diese Polymerbestandteile zu 20 bis 100 Gew.-% Polyalkyl(meth)acrylate sind,
   dadurch gekennzeichnet,
   daß das modifizierende Polyalkyl(meth)acrylat in Anteilen von 50 bis 99,8 Gew.-% aus $C_6$- bis $C_{28}$-Alkyl(meth)acrylaten, in Anteilen von 0,2 bis 30 Gew.-% aus polymerisierbaren Monomeren mit mindestens einer weiteren reaktiven Gruppe und in Anteilen von 0 bis 49,8 Gew.-% aus einer oder mehreren anderen polymerisierbaren Verbindungen mit einer polymerisierbaren Doppelbindung, aufgebaut und in dem Bitumen gleichmäßig verteilt ist, und dessen Polymermoleküle durch Reaktionen der funktionellen Gruppen in den Polymeren untereinander oder/und durch Reaktionen dieser mit einem eingebrachten mehrfunktionellen reaktiven organischen Zusatz, ausgewählt aus der Gruppe der niedermolekularen organischen Verbindungen und der Gruppe der Polyalkylenetherglykole, Polyalkylenetheramine oder Polyalkylenetheraminoalkohole, im Bitumen kovalent vernetzt wurden.

2. Homogenes, polymermodifiziertes Bitumen nach Anspruch 1, dadurch gekennzeichnet, daß die zur homogenen Polymermodifizierung zugesetzten polyfunktionellen Polyalkyl(meth)acrylatmoleküle und die mehrfunktionellen, reaktiven organischen Zusätze Verbindungen sind, die alkoholische oder phenolische OH-Gruppen, Aminogruppen, Säuregruppen, Säureanhydridgruppen, Furfurylgruppen, Cyclopentadienylgruppen, Maleinimidgruppen, Epoxygruppen, Aziridingruppen, Methylolethergruppen, Isocyanatgruppen oder Silangruppen als reaktive Gruppen enthalten.

3. Verfahren zur Herstellung von homogenem, polymermodifiziertem Bitumen mit verbesserter elastischer Rückstellung, guter Kälteflexibilität und hoher thermischer Stabilität, dadurch gekennzeichnet, daß ein 0,5 bis 50 Gew.-% Poly(meth)acrylat-haltiges Bitumen-Polymer-Gemisch durch Einarbeitung eines polyfunktionellen Poly(meth) acrylate aus 50 bis 99,8 Gew.-% $C_6$- bis $C_{28}$-Alkyl(meth)acrylaten, 0,2 bis 30 Gew.-% polymerisierbaren Monomeren mit mindestens einer weiteren reaktiven Gruppe und 0 bis 49,8 Gew.-% einer oder mehreren anderen Verbindungen mit einer polymerisierbaren Doppelbindung erhalten wird, und dieses polyfunktionelle Polyalkyl (meth)acrylat über die in dem Polymerisat vorhandenen reaktiven Gruppen, unter Einwirkung von Katalysatoren und/oder Wärme im Bitumen kovalent vernetzt wird.

4. Verfahren zur Herstellung von homogenem, polymermodfziertem Bitumen nach Anspruch 3, dadurch gekennzeichnet, daß neben dem Einarbeiten des reaktiven Polyalkyl(meth)acrylats, das bevorzugt nur eine Art reaktiver Gruppen enthält, eine weitere, organische mindestens bifunktionell reaktive Komponente, ausgewählt aus der Gruppe des niedermolekularen polyfunktionellen organischen Verbindungen und der Gruppe der Polyalkylenetherglykole, Polyalkylenetheramine oder Polyalkylenetheraminoalkohole, deren reaktive Gruppen mit den reaktiven Gruppen des Polyalkyl(meth)acrylats zur Reaktion befähigt sind, eingearbeitet wird, und dann die Polyalkyl (meth)acrylatmoleküle durch thermische und/oder katalytische Aktivierung der reaktiven Gruppen in den Polyalkyl(meth)acrylaten und in den Vernetzerkomponenten zur kovalent vernetzenden Reaktion gebracht werden.

**Claims**

1. A polymer-modified bitumen which is resistant to separation during storage under heat and has a high elastic recovery, good cold flexibility and high thermostability and contains 0.5 to 50 wt.% of polymer components, these polymer components comprising 20 to 100 wt.% of polyalkyl(meth)acrylates,
   characterised in that the modified polyalkyl(meth)acrylate is synthesised, in amounts of 50 to 99.8 wt.%, from $C_6$ to $C_{28}$ alkyl(meth)acrylates, in amounts of from 0.2 to 30 wt.%, from polymerisable monomers with at least a further reactive group, and in amounts of 0 to 49.8 wt.%, from one or several other polymerisable compounds with a polymerisable double bond, and is uniformly distributed in the bitumen, and that the polymer molecules thereof have been covalently cross-linked in the bitumen through reactions of the functional groups in the polymers between one another and/or through reactions of these groups with an introduced multi-functional reactive organic additive selected from the group of low-molecular, organic compounds and the group of polyalkylene ether glycols, polyalkylene ether amines or polyalkylene ether amino alcohols.

2. A homogenous, polymer-modified bitumen according to claim 1, characterised in that the polyfunctional polyalkyl (meth)acrylate molecules and the multi-functional, reactive, organic additives mixed in for homogenous polymer modification are compounds which contain alcoholic or phenolic OH groups, amino groups, acid groups, acid anhydride groups, furfuryl groups, cyclopentadienyl groups, maleinimide groups, epoxy groups, aziridine groups, methylol ether groups, isocyanate groups or silane groups as reactive groups.

3. A process for preparing homogenous, polymer-modified bitumen with an improved elastic recovery, good cold flexibility and high thermostability, characterised in that a bitumen-polymer mixture containing 0.5 to 50 wt.% of poly(meth)acrylate is obtained by incorporating a polyfunctional poly(meth)acrylate comprising 50 to 99.8 wt.% of $C_6$ to $C_{28}$ alkyl(meth)acrylates, 0.2 to 30 wt.% of polymerisable monomers with at least one further reactive group and 0 to 49.8 wt.% of one or several other compounds with a polymerisable double bond, and that this polyfunctional polyalkyl(meth)acrylate is under the effect of catalysts and/or heat covalently cross-linked in the bitumen by the reactive groups present in the polymer.

4. A process for preparing homogenous, polymer-modified bitumen according to claim 3, characterised in that, in addition to incorporating the reactive polyalkyl(meth)acrylate which preferably contains only one type of reactive groups, a further organic, at least bifunctionally reactive component is incorporated which is selected from the group of low-molecular, polyfunctional organic components and the group of polyalkylene ether glycols, polyalkylene ether amines or polyalkylene ether amino alcohols, whose reactive groups are capable of reaction with the reactive groups of the polyalkyl(meth)acrylate, and the polyalkyl(meth)acrylate molecules then carry out a covalently cross-linking reaction through a thermal and/or catalytic activation of the reactive groups in the polyalkyl (meth)acrylates and in the cross-linking components.

**Revendications**

1. Bitume modifié par un polymère, stable à la ségrégation au stockage à chaud, doté d'une restitution élastique élevée, d'une bonne flexibilité à froid et d'une haute stabilité thermique, contenant 0,5 à 50% en poids de constituants polymères, ces constituants polymères étant, pour 20 à 100% en poids, des poly(méth)acrylates d'alkyle,
   caractérisé en ce que le poly(méth)acrylate d'alkyle modificateur est composé de (méth)acrylates d'alkyle en $C_6$-$C_{28}$ dans des proportions de 50 à 99,8% en poids, de monomères polymérisables comportant au moins un autre groupement réactif dans des proportions de 0,2 à 30% en poids et d'un ou de plusieurs autres composés polymérisables comportant une double liaison polymérisable dans des proportions de 0 à 49,8% en poids et est réparti régulièrement dans le bitume, et les molécules polymères de celui-ci ont été réticulées, dans le bitume, de manière covalente par des réactions des groupements fonctionnels dans les polymères entre eux et/ou par des réactions de ceux-ci avec un additif organique réactif multifonctionnel introduit, choisi dans le groupe des composés organiques de bas poids moléculaire et dans le groupe des polyalkylène-étherglycols, des polyalkylène-étheramines ou des polyalkylène-étheraminoalcools.

2. Bitume homogène modifié par un polymère selon la revendication 1, caractérisé en ce que les molécules de poly (méth)acrylate d'alkyle multifonctionnel ajoutées pour la modification homogène par polymère et les additifs organiques réactifs multifonctionnels sont des composés qui contiennent, en tant que groupements réactifs, des groupements OH alcooliques ou phénoliques, des groupements amino, des groupements acides, des groupements anhydride d'acide, des groupements furfuryle, des groupements cyclopentadiényle, des groupements maléimide, des groupements époxy, des groupements aziridine, des groupements méthyloléther, des groupements isocyanate ou des groupements silane.

**3.** Procédé de préparation de bitume homogène modifié par un polymère, doté d'une restitution élastique améliorée, d'une bonne flexibilité à froid et d'une haute stabilité thermique, caractérisé en ce qu'un mélange bitume/polymère contenant 0,5 à 50% en poids de poly(méth)acrylate est obtenu par incorporation d'un poly(méth)acrylate multifonctionnel composé de 50 à 99,8% de (méth)acrylates d'alkyle en $C_6$-$C_{28}$, de 0,2 à 30% en poids de monomères polymérisables comportant au moins un autre groupement réactif et de 0 à 49,8% en poids d'un ou de plusieurs autres composés comportant une double liaison polymérisable, et ce poly(méth)acrylate d'alkyle multifonctionnel est réticulé, dans le bitume, de façon covalente sur les groupements réactifs présents dans le polymère, sous l'action de catalyseurs et/ou de chaleur.

**4.** Procédé de préparation de bitume homogène modifié par un polymère selon la revendication 3, caractérisé en ce qu'en plus de l'incorporation du poly(méth)acrylate d'alkyle réactif, qui ne contient de préférence qu'une sorte de groupements réactifs, il est incorporé un autre composant organique réactif, au moins bifonctionnel, choisi dans le groupe des composés organiques multifonctionnels de bas poids moléculaire et dans le groupe des polyalkylène-étherglycols, des polyalkylène-étheramines ou des polyalkylène-étheraminoalcools, dont les groupements réactifs sont susceptibles de réaction avec les groupements réactifs du poly(méth)acrylate d'alkyle, puis les molécules de poly(méth)acrylate d'alkyle sont mises en réaction de réticulation covalente par activation thermique et/ou catalytique des groupements réactifs dans les poly(méth)acrylates d'alkyle et dans les composants réticulants.